# EUROPEAN PATENT SPECIFICATION

(11) **EP 3 106 702 B1**
(45) Date of publication and mention of the grant of the patent: **19.12.2018**
(21) Application number: 16173613.7
(22) Date of filing: 08.06.2016
(51) Int. Cl.: F16D 65/12

(54) **BRAKE DISK**
BREMSSCHEIBE
DISQUE DE FREIN

(30) Priority: 16.06.2015 TW 104119392
(43) Date of publication of application: 21.12.2016
(73) Proprietor: Chen, Hui-Juan, Taichung City 407 (TW)
(72) Inventor: Chen, Hui-Juan, Taichung City 407 (TW)
(74) Representative: Lang, Christian

(56) References cited:
- DE-U1- 29 906 138
- DE-U1-202013 104 350
- TW-U- M 306 566
- US-A- 4 848 521
- US-A1- 2005 082 125
- US-A1- 2015 060 218

## Description

### BACKGROUND OF THE INVENTION

### Field of the Invention

The present invention relates to a disk, and more particularly to a brake disk.

### Description of the Prior Art

Usually, a conventional brake disk as disclosed in TWM462809 mainly includes an inner plate, a plurality of fixing members and an outer ring. The inner plate is formed with a plurality of connecting slots in equal intervals at an outer edge thereof, and two ends of the connecting slot have a blocking face and are formed with a through hole respectively. The outer ring is protrusively formed with a plurality of connecting portions in equal intervals at an inner edge thereof and is formed with a pass hole. The connecting portion is arranged in the connecting slot, and a thickness of the connecting portion is smaller than a width of the connecting slot. The fixing member is disposed through the through hole and the pass hole via an end having an engaging slot, and a C-ring is engaged with the engaging slot of the fixing member.

However, the above-mentioned structure has great thickness axially (including the thicknesses of the inner plate and the outer ring); therefore, a user needs to consider the spatial restriction when assembling the brake disk. In addition, the above-mentioned structure cannot move repositionably, and gaps among members make the members collide and abrade with one another easily.

The present invention has arisen to mitigate and/or obviate the afore-described disadvantages.

From DE 202013104350 U1 a connecting assembly for the brake disk of a floating disk brake is known. The connecting assembly comprises a rivet, a disk spring and a washer, with the disk spring being located between the washer and the brake disk. The disk spring is of conical shape and abuts with its wider edge against the brake disk.

From US 2015/0060218 A1 a connecting assembly for the disk of a disk brake is known. The connecting assembly comprises an externally threaded bolt and an internally threaded nut abutting both against the brake disk. Thus, the connecting assembly according to this document does not allow the disk brake to float.

### SUMMARY OF THE INVENTION

The major object of the present invention is to provide a brake disk, which has members disposed inwardly to prevent the members from being rusted and damaged due to dust or water from outside. In addition, a side of an inner annular member and a side of an outer annular member are on a same plane by the first side face, and an other side of the inner annular member and an other side of the outer annular member are disposed on a same plane by the second side face so as to decrease a thickness of the brake disk; a helical spring may be a conical coil spring to further decrease a volume of the brake disk after the conical coil spring is compressed; the helical spring may abut against the same side of the inner and outer annular members to float, and the helical spring has greater supporting area and flexibility to float stably and elastically; the helical spring may be received in the spacing member to be position-restricted and protected; and the brake disk has an identification portion to prevent misassembling.

To achieve the above and other objects, a brake disk is provided, including: a disk portion, having a first side face and a second side face facing opposite to the first side face, the first side face being for being assembled with a wheel and facing the wheel, the disk portion including an inner annular member and an outer annular member, the inner annular member being circumferentially formed with a first assembling mechanism, the outer annular member having a second assembling mechanism, the first assembling mechanism and the second assembling mechanism being correspondingly connected with each other; at least two connecting assemblies, being connected with the first assembling mechanism and the second assembling mechanism respectively, each said connecting assembly including a helical spring, each said helical spring being on the first side face and abutting against between the connecting assembly and the first side face. The brake disk is characterised in that the connecting assembly further includes a spacing member being located at the first side face and includes a bottom wall and a circumferential wall annularly connected with the bottom wall, wherein the circumferential wall extends perpendicularly toward the first side face and defines a receiving space and is spaced apart from the first side face, and in that the helical spring is a conical coil spring being tapered toward the bottom wall and partially seated within the receiving space, wherein the coils of the conical coil spring do not overlap radially.

The present invention will become more obvious from the following description when taken in connection with the accompanying drawings, which show, for purpose of illustrations only, the preferred embodimcnt(s) in accordance with the present invention.

### BRIEF DESCRIPTION OF THE DRAWINGS

Fig. 1 is a perspective drawing of a preferred embodiment of the present invention;
Fig. 2 is a partial drawing showing the preferred embodiment of the present invention;
Fig. 3 is a breakdown drawing of the preferred embodiment of the present invention;
Fig. 4 is a cross-sectional drawing of the preferred embodiment of the present invention;
Fig. 5 is a partial cross-sectional drawing of the preferred embodiment of the present invention;
Fig. 6 is a drawing showing the preferred embodiment of the present invention in use; and
Fig. 7 is a drawing showing another embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

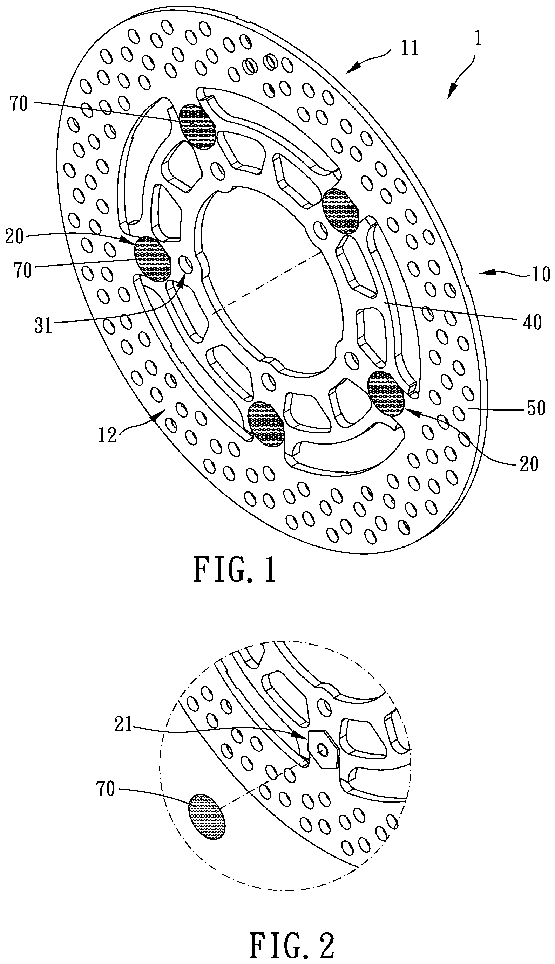

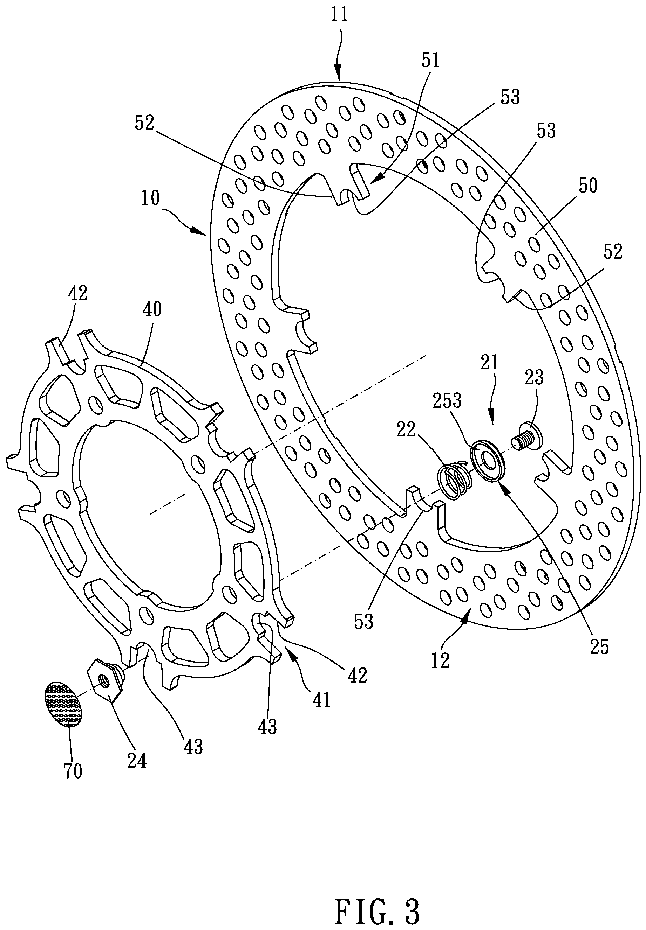

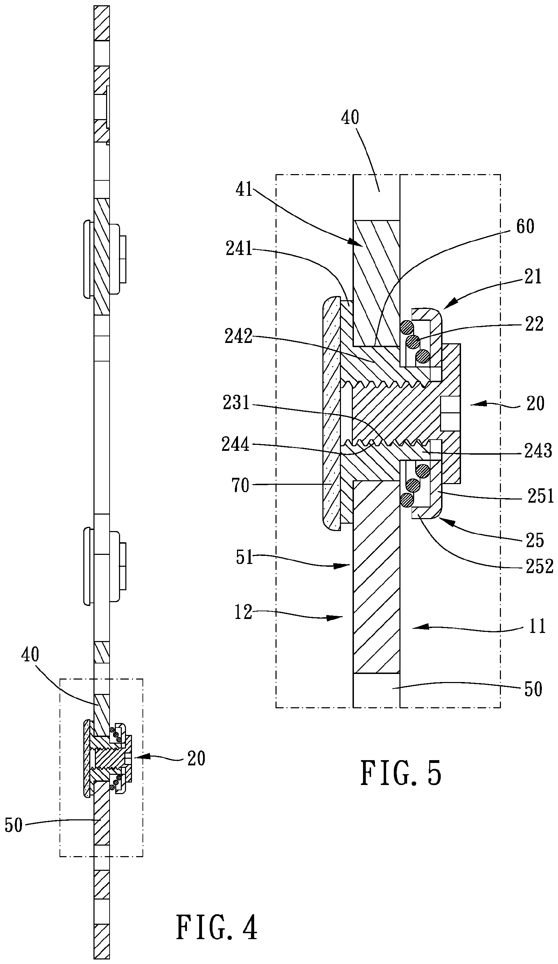

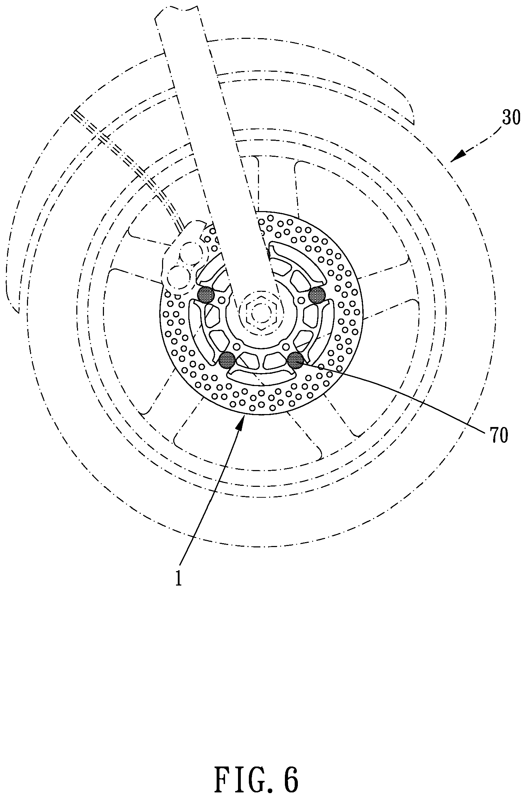

Please refer to Figs. 1 to 6 for a preferred embodiment of the present invention. A brake disk 1 includes a disk portion 10 and at least two connecting assemblies 20.

The disk portion 10 has a first side face 11 and a second side face 12 facing opposite to the first side face 11. The first side face 11 is for being assembled with a wheel 30 and facing the wheel 30, and the wheel 30 may be a part of a bicycle or a part of a motorcycle. The disk portion 10 includes an inner annular member 40 and an outer annular member 50. Specifically, the inner annular member 40 is circumferentially formed with a first assembling mechanism 41, and the outer annular member 50 has a second assembling mechanism 51. The first assembling mechanism 41 and the second assembling mechanism 51 are correspondingly connected with each other to connect the inner and outer annular members 40, 50.

Furthermore, the first assembling mechanism 41 includes a plurality of recesses 42 radially formed thereon, and the recesses 42 are annularly arranged on the inner annular member 40 in intervals. The second assembling mechanism 51 includes a plurality of protrusions 52 radially formed thereon, and the protrusions 52 correspond to the recesses 42 and are engaged with each other. Specifically, the first and second assembling mechanisms 41, 51 are radially engaged with each other and non-movable relative to each other tangently. However, in other embodiments, the first assembling mechanism 41 and the second assembling mechanism 51 may respectively have a protrusively formed structure, a recessively formed structure or other structures which are engageable with each other.

In this embodiment, the first assembling mechanism 41 and the second assembling mechanism 51 can be assembled with each other, respectively, to form a plurality of connecting holes 60. For example, in this embodiment, the first assembling mechanism 41 may include a plurality of first arched portions 43 recessively formed thereon, and the second assembling mechanism 51 may include a plurality of second arched portions 53 recessively formed thereon. Each said arched portion 43 corresponds to each said second arched portion 53, and each said first arched portion 43 and each said second arched portion 53 define the connecting hole 60. It is to be noted that one side of each said first arched portion 43 and one side of each said second arched portion 53 are disposed on a same plane by the first side face 11, and an other side of each said first arched portion 43 and an other side of each said second arched portion 53 are disposed on a same plane by the second side face 12.

The connecting assemblies 20 include a fixation portion 21 and a helical spring 22 surrounding the fixation portion 21 respectively, and each said fixation portion 21 is connected with the first assembling mechanism 41 and the second assembling mechanism 51. Specifically, the fixation portion 21 is disposed through the helical spring 22, the first assembling mechanism 41 and the second assembling mechanism 51, and two opposite sides of the helical spring 22 abut against the first side face 11 at an end of the connecting hole 60 and an end of the fixation portion 21 respectively. More specifically, each said connecting assembly 20 is assembled to each said connecting hole 60, the fixation portion 21 is disposed through the connecting hole 60, each said helical spring 22 is located on the first side face 11 and abuts against between the fixation portion 21 and the first side face 11, and a side of the helical spring 22 abuts against both the first arched portion 43 and the second arched portion 53.

In this embodiment, the fixation portion 21 may include a bolt member 23, a nut member 24 and a spacing member 25. The bolt member 23 and the nut member 24 may be disposed through the first assembling mechanism 41 and the second assembling mechanism 51 and fixedly screwed to each other. More specifically, the bolt member 24 may include an abutting portion 241, a body portion 242 and a surrounded portion 243. The body portion 242 is disposed through the first and second assembling mechanisms 41, 51, and the body portion 242 is substantially fittingly engaged with the first and the second assembling mechanisms 41, 51. The abutting portion 241 abuts against the second side face 12. The nut member 24 may be formed with an inner threaded portion 244, and the bolt member 23 may be formed with an outer threaded portion 231. The bolt member 23 can be fixedly screwed to the nut member 24 through the inner and outer threaded portions 244, 231 being screwed to each other.

The helical spring 22 and the spacing member 25 are disposed around the surrounded portion 243 and are sandwiched between the bolt member 23 and the first side face 11. Furthermore, the spacing member 25 is disposed around the bolt member 23 and the nut member 24 and located on the first side face 11, and the helical spring 22 abuts against between the spacing member 25 and the first side face 11. Specifically, the spacing member 25 has a bottom wall 251 and a circumferential wall 252 connected with the bottom wall 251, and the bottom wall 251 and the circumferential wall 252 define a receiving space 253 so that the helical spring 22 can be received in the receiving space 253.

The connecting assembly 20 further includes an identification portion 70, and the identification portion 70 is fixedly disposed on the fixation portion 21 and located on the second side face 12. For example, the identification portion 70 may be fixedly stuck on a side of the abutting portion 241, and the identification portion 70 may have colors or be printed with texts or patterns; therefore, through the identification portion 70, misassembling can be prevented.

In actual practice, the inner annular member 40 has an assembling portion 31 and is for being assembled with the wheel 30, and the outer annular member 50 is for a caliper device to clip thereon. The inner and outer annular members 40, 50 repositionably move relative to each other through the helical spring 22 which abuts against between the first and second assembling mechanisms 41, 51. When the caliper device clips on the outer annular member 50, the outer annular member 50 can move relative to the inner annular member 40 to allow the inner and outer annular members 40, 50 to float. Preferably, compared with a conventional wave spring, the two opposite sides of the helical spring 22 have greater supporting area to elevate stability, and the helical spring 22 has preferable structural strength and elasticity; therefore, when the helical spring 22 is applied to the brake disk 1, the brake disk 1 has preferable floating effect.

It is to be noted that a side of an inner annular member 40 and a side of an outer annular member 50 are on a same plane by the first side face 11, and an other side of the inner annular member 40 and an other side of the outer annular member 50 are disposed on a same plane by the second side face 12 so as to decrease a thickness of the brake disk 1. In addition, the helical spring 22 abuts against a same side of the inner and outer annular members 40, 50 to achieve floating effect. The helical spring 22 may be a cylindrical coil spring or a conical coil spring, and the conical spring which is tapered toward a direction can further decrease a volume after being compressed. Furthermore, the bolt member 23, the spacing member 25 and the helical spring 22 disposed on the first side face 11 face inwardly toward the wheel 30 so as to prevent from being rusted and damaged due to dust or water from outside. The spacing member 25 can further protect the helical spring 22 and restrain a movement of the helical spring 22. The identification portion 70 fixedly disposed on the second side face 12 can also protect the fixation portion 21.

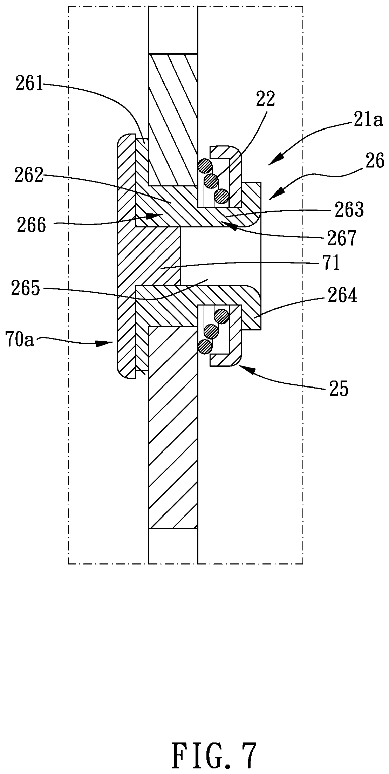

In another embodiment as shown in Fig. 7, an fixation portion 21a includes a rivet member 26. The rivet member 26 is disposed through the first assembling mechanism, the second assembling mechanism, the helical spring 22 and the spacing member 25, and two ends of the rivet member 26 fixedly rivet the first assembling mechanism, the second assembling mechanism, the helical spring 22 and the spacing member 25. Specifically, the rivet member 26 includes an abutting portion 261, a body portion 262 and a surrounded portion 263. The body portion 262 is disposed the first and second assembling mechanisms, the abutting portion 261 abuts against the second side face, and the helical spring 22 and the spacing member 25 are disposed around the surrounded portion 263. The rivet member 26 includes a restraining portion 264, and the restraining portion 264 may be pressed to deform so as to be restrictedly attached to a side of the spacing member 25.

The rivet member 26 is formed with a through hole 265 along an axial direction thereof, the body portion 262 has a first wall thickness 266, and the surrounded portion 263 has a second wall thickness 267. It is to be noted that the first wall thickness 266 is equal to or greater than the second wall thickness 267 so that the body portion 262 has preferable structural strength. The rivet member 26 is disposed between the first and second assembling mechanisms to support the first and second assembling mechanisms. An identification portion 70a may be protrusively formed with a protrusive portion 71, and the protrusive portion 71 is engaged with an end of the through hole 265. However, in other embodiments, the rivet member 26 may be solid and has preferable structural strength.

Given the above, members of the brake disk are disposed inwardly to prevent the members from being rusted and damaged due to the dust or water from outside. In addition, a side of an inner annular member and a side of an outer annular member are on a same plane by the first side face, and the other side of the inner annular member and the other side of the outer annular member are disposed on a same plane by the second side face so as to decrease a thickness of the brake disk; the helical spring is a conical coil spring to further decrease the volume of the brake disk after the conical coil spring is compressed; the helical spring abuts against the same side of the inner and outer annular members to float, and the helical spring has greater supporting area and flexibility to float stably and elastically; the helical spring may b e received in the spacing member to be position-restricted and protected; and the brake disk has the identification portion to prevent misassembling.

While we have shown and described various embodiments in accordance with the present invention, it should be clear to those skilled in the art that further embodiments may be made without departing from the scope of the present invention.

## Claims

1. A brake disk (1), including:
a disk portion (10), having a first side face (11) and a second side face (12) facing opposite to the first side face (11), the first side face (11) for being assembled with a wheel (30) and facing the wheel (30), the disk portion (10) including an inner annular member (40) and an outer annular member (50), the inner annular member (40) being circumferentially formed with a first assembling mechanism (41), the outer annular member (50) having a second assembling mechanism (51), the first assembling mechanism (41) and the second assembling mechanism (51) being correspondingly connected with each other;
at least two connecting assemblies (20), being connected with the first assembling mechanism (41) and the second assembling mechanism (51) respectively, each said connecting assembly (20) including a helical spring (22), the helical spring (22) being on the first side face (11) and abutting against between the connecting assembly (20) and the first side face (11),
**characterised in that**
the connecting assembly (20) further includes a spacing member (25) being located at the first side face (11) and includes a bottom wall (251) and a circumferential wall (252) annularly connected with the bottom wall (251), wherein the circumferential wall (252) extends perpendicularly toward the first side face (11) and defines a receiving space (253) and is spaced apart from the first side face (11),
and **in that** the helical spring is a conical coil spring being tapered toward the bottom wall (251) and partially seated within the receiving space (253), wherein the coils of the conical coil spring (22) do not overlap radially,

2. The brake disk of claim 1, wherein the first assembling mechanism (41) includes a plurality of recesses (42) radially formed thereon, the recesses (42) are annularly arranged on the inner annular member (40) in intervals, the second assembling mechanism (51) includes a plurality of protrusions (52) radially formed thereon, and the protrusions (52) correspond to the recesses (42) and are engaged with each other.

3. The brake disk of claim 1, wherein the first assembling mechanism (41) and the second assembling mechanism (51) are assembled with each other, respectively, to from a plurality of connecting holes (60), and each said connecting assembly (20) is correspondingly assembled to each said connecting hole (60).

4. The brake disk of claim 3, wherein the first assembling mechanism (41) includes a plurality of first arched portions (43) recessively formed thereon, the second assembling mechanism (51) includes a plurality of second arched portions (53) recessively formed thereon, each said first arched portion (43) corresponds to each said second arched portion (53) to form the connecting hole (60), one side of each said first arched portion (43) and one side of each said second arched portion (53) are disposed on a same plane by the first side face, and an other side of each said first arched portion (43) and an other side of each said second arched portion (53) are disposed on a same plane by the second side face.

5. The brake disk of claim 4, wherein the connecting assembly (20) is disposed through the connecting hole (60), two opposite sides of the helical spring (22) abut against the first side face at an end of the connecting hole (60) and an end of the connecting assembly (60) respectively, and one of the two sides of the helical spring (22) abuts against both the first arched portion (43) and the second arched portion (53).

6. The brake disk of claim 1, wherein the connecting assembly (20) includes a bolt member (23) and a nut member (24), wherein the bolt member (23) and the nut member (24) are disposed through the first assembling mechanism (41) and the second assembling mechanism (51) and fixedly screwed to each other, the spacing member (25) is disposed around the bolt member (23) and the nut member (24) and located on the first side face (11), and the helical spring (22) abuts against between the spacing member (25) and the first side face (11).

7. The brake disk of claim 1, wherein the connecting assembly (20) further includes an identification portion (70) and an fixation portion (21), the fixation portion (21) is disposed through the helical spring (22), the first assembling mechanism (41) and the second assembling mechanism (51), and the identification portion (70) is fixedly assembled on the fixation portion (21) and located on the second side face (12).

8. The brake disk of claim 6, wherein the nut member (24) includes an abutting portion (241), a body portion (242) and a surrounded portion (243), the body portion (242) is disposed through the first and second assembling mechanisms (41, 51), the body portion (242) is substantially fittingly engaged with the first and second assembling mechanisms (41, 51), the abutting portion (241) abuts against the second side face (12), and the helical spring (22) and the spacing member (25) are disposed around the surrounded portion (243) and restrictedly sandwiched between the bolt member (23) and the first side face (11).

9. The brake disk of claim 1, wherein when the circumferential wall (252) abuts against the first side face (11), the top coil of the conical coil spring (22) does not contact the first side face (11).

## Patentansprüche

1. Bremsscheibe (1), umfassend:
einen Scheibenabschnitt (10), der eine erste Seitenfläche (11) und eine zweite Seitenfläche (12) aufweist, die in entgegengesetzte Richtung zu der ersten Seitenfläche (11) zeigt, wobei die erste Seitenfläche (11) zum Zusammenbauen mit einem Rad (30) ist und dem Rad (30) zugewandt ist, wobei der Scheibenabschnitt (10) ein inneres ringförmiges Element (40) und ein äußeres ringförmiges Element (50) umfasst, wobei das innere ringförmige Element (40) umlaufend mit einem ersten Montagemechanismus (41) ausgebildet ist, wobei das äußere ringförmige Element (50) einen zweiten Montagemechanismus (51) aufweist, wobei der erste Montagemechanismus (41) und der zweite Montagemechanismus (51) entsprechend miteinander verbunden sind,
zumindest zwei Verbindungsaufbauten (20), die entsprechend mit dem ersten Montagemechanismus (41) und dem zweiten Montagemechanismus (51) verbunden sind, wobei jeder Verbindungsaufbau (20) eine schraubenförmige Feder (22) umfasst, wobei die schraubenförmige Feder (22) an der ersten Seitenfläche (11) ist und zwischen dem Verbindungsaufbau (20) und der ersten Seitenfläche (11) anliegt
**dadurch gekennzeichnet, dass**
der Verbindungsaufbau (20) ferner ein Abstandselement (25) umfasst, das an der ersten Seitenfläche (11) angeordnet ist und eine Bodenwand (251) und eine Umfangswand (252) umfasst, die ringförmig mit der Bodenwand (251) verbunden ist, wobei die Umfangswand (252) sich senkrecht zu der ersten Seitenfläche (11) erstreckt und einen Aufnahmeraum (253) definiert und von der ersten Seitenfläche (11) beabstandet ist,
und dass die schraubenförmige Feder eine konische Schraubenfeder ist, die zu der Bodenwand (251) verjüngt ist und teilweise in dem Aufnahmeraum (253) sitzt, wobei die Windungen der konischen Schraubenfeder (22) nicht radial überlappen.

2. Bremsscheibe gemäß Anspruch 1, bei der der erste Montagemechanismus (41) eine Vielzahl an Aussparungen (42) umfasst, die daran radial ausgebildet sind, wobei die Aussparungen (42) auf dem inneren ringförmigen Element (40) in Intervallen ringförmig angeordnet sind, wobei der zweite Montagemechanismus (51) eine Vielzahl an Vorsprüngen (52) umfasst, die daran radial ausgebildet sind, und wobei die Vorsprünge (52) den Aussparungen (42) entsprechen und miteinander in Eingriff stehen.

3. Bremsscheibe gemäß Anspruch 1, bei der der erste Montagemechanismus (41) und der zweite Montagemechanismus (51) entsprechend miteinander zusammengebaut sind, um eine Vielzahl an Verbindungslöchern (60) zu bilden, und wobei jeder Verbindungsaufbau (20) entsprechend an jedem Verbindungsloch (60) angebracht ist.

4. Bremsscheibe gemäß Anspruch 3, bei der der erste Montagemechanismus (41) eine Vielzahl an ersten bogenförmigen Abschnitten (43) umfasst, die rezessiv daran ausgebildet sind, wobei der zweite Montagemechanismus (51) eine Vielzahl an zweiten bogenförmigen Abschnitten (53) umfasst, die rezessiv daran ausgebildet sind, wobei jeder erste bogenförmige Abschnitt (43) mit jedem zweiten bogenförmigen Abschnitt (53) korrespondiert, um das Verbindungsloch (60) zu bilden, wobei eine Seite von jedem ersten bogenförmigen Abschnitt (43) und eine Seite von jedem zweiten bogenförmigen Abschnitt (53) durch die erste Seitenfläche auf einer gleichen Ebene angeordnet sind und wobei eine andere Seite von jedem ersten bogenförmigen Abschnitt (43) und eine andere Seite von jedem zweiten bogenförmigen Abschnitt (53) durch die zweite Seitenfläche auf einer gleichen Ebene angeordnet sind.

5. Bremsscheibe gemäß Anspruch 4, bei der der Verbindungsaufbau (20) durch das Verbindungsloch (60) angeordnet ist, wobei zwei gegenüber liegende Seiten der schraubenförmigen Feder (22) entsprechend gegen die erste Seitenfläche an einem Ende des Verbindungslochs (60) und an einem Ende des Verbindungsaufbaus (60) anliegen und wobei eine der beiden Seiten der schraubenförmigen Feder (22) sowohl gegen den ersten bogenförmigen Bereich (43) als auch den zweiten bogenförmigen Bereich (53) anliegt.

6. Bremsscheibe gemäß Anspruch 1, bei der der Verbindungsaufbau (20) ein Bolzenelement (23) und ein Mutterelement (24) umfasst, wobei das Bolzenelement (23) und das Mutterelement (24) durch den ersten Montagemechanismus (41) und den zweiten Montagemechanismus (51) angeordnet sind und fest miteinander verschraubt sind, wobei das Abstandselement (25) um das Bolzenelement (23) und das Mutterelement (24) angebracht und an der ersten Seitenfläche (11) angeordnet ist und wobei die schraubenförmige Feder (22) zwischen dem Abstandselement (25) und der ersten Seitenfläche (11) anliegt.

7. Bremsscheibe gemäß Anspruch 1, bei der der Verbindungsaufbau (20) ferner einen Erkennungsabschnitt (70) und einen Befestigungsabschnitt (21) umfasst, wobei der Befestigungsabschnitt (21) durch die schraubenförmige Feder (22), den ersten Montagemechanismus (41) und den zweiten Montagemechanismus (51) angeordnet ist und wobei der Erkennungsabschnitt (70) fest an dem Befestigungsabschnitt (21) angebracht und an der zweiten Seitenfläche (12) angeordnet ist.

8. Bremsscheibe gemäß Anspruch 6, bei der das Mutterelement (24) einen Anlageabschnitt (241), einen Körperabschnitt (242) und einen umschlossenen Abschnitt (243) umfasst, wobei der Körperabschnitt (242) durch die ersten und zweiten Montagemechanismen (41, 51) angeordnet ist, wobei der Körperabschnitt (242) im Wesentlichen mit den ersten und zweiten Aufbaumechanismen (41, 51) passend in Eingriff steht, wobei der Anlageabschnitt (241) gegen die zweite Seitenfläche (12) anliegt und wobei die schraubenförmige Feder (22) und das Abstandselement (25) um den umschlossenen Abschnitt (243) angeordnet sind und begrenzt zwischen dem Bolzenelement (23) und der ersten Seitenfläche (11) eingeklemmt sind.

9. Bremsscheibe gemäß Anspruch 1, bei der die Umfangswand (252) gegen die erste Seitenfläche (11) anliegt, wobei die obere Windung der konischen Schraubenfeder (22) die erste Seitenfläche (11) nicht kontaktiert.

## Revendications

1. Disque de frein (1) comportant:
une partie de disque (10), ayant une première face latérale (11) et une seconde face latérale (12) orientée à l'opposé de la première face latérale (11), la première face latérale (11) étant destinée à être assemblée à une roue (30) et faisant face à la roue (30), la partie de disque (10) comportant un élément annulaire interne (40) et un élément annulaire externe (50),
l'élément annulaire interne (40) étant formé de manière circonférentielle avec un premier mécanisme d'assemblage (41), l'élément annulaire externe (50) ayant un second mécanisme d'assemblage (51), le premier mécanisme d'assemblage (41) et le second mécanisme d'assemblage (51) étant reliés de manière correspondante l'un à l'autre;
au moins deux ensembles de liaison (20), reliés au premier mécanisme d'assemblage (41) et au second mécanisme d'assemblage (51) respectivement, chacun desdits ensembles de liaison (20) comportant un ressort hélicoïdal (22), le ressort hélicoïdal (22) se trouvant sur la première face latérale (11) et venant en butée entre l'ensemble de liaison (20) et la première face latérale (11),
**caractérisé en ce que**
l'ensemble de liaison (20) comporte en outre un élément d'espacement (25) situé au niveau de la première face latérale (11) et comporte une paroi inférieure (251) et une paroi circonférentielle (252) reliée de manière annulaire à la paroi inférieure (251), dans lequel la paroi circonférentielle (252) s'étend perpendiculairement vers la première face latérale (11) et définit un espace de réception (253) et est écartée de la première face latérale (11),
et **en ce que** le ressort hélicoïdal est un ressort à enroulement conique effilé vers la paroi inférieure (251) et en appui partiel à l'intérieur de l'espace de réception (253), dans lequel les spires du ressort à enroulement conique (22) ne se chevauchent pas radialement.

2. Disque de frein selon la revendication 1, dans lequel le premier mécanisme d'assemblage (41) comporte une pluralité d'évidements (42) formés radialement sur celui-ci, les évidements (42) sont agencés de manière annulaire sur l'élément annulaire interne (40) par intervalles, le second mécanisme d'assemblage (51) comporte une pluralité de saillies (52) formées radialement sur celui-ci, et les saillies (52) correspondent aux évidements (42) et sont en prise les uns avec les autres.

3. Disque de frein selon la revendication 1, dans lequel le premier mécanisme d'assemblage (41) et le second mécanisme d'assemblage (51) sont assemblés l'un à l'autre, respectivement, pour former une pluralité de trous de liaison (60), et chacun desdits ensembles de liaison (20) est assemblé de manière correspondante à chacun desdits trous de liaison (60).

4. Disque de frein selon la revendication 3, dans lequel le premier mécanisme d'assemblage (41) comporte une pluralité de premières parties arquées (43) formées en retrait sur celui-ci, le second mécanisme d'assemblage (51) comporte une pluralité de secondes parties arquées (53) formées en retrait sur celui-ci, chacune desdites premières parties arquées (43) correspond à chacune desdites secondes parties arquées (53) pour former le trou de liaison (60), un côté de chacune desdites premières parties arquées (43) et un côté de chacune desdites secondes parties arquées (53) sont disposés sur un même plan par la première face latérale, et un autre côté de chacune desdites premières parties arquées (43) et un autre côté de chacune desdites secondes parties arquées (53) sont disposés sur un même plan par la seconde face latérale.

5. Disque de frein selon la revendication 4, dans lequel l'ensemble de liaison (20) est disposé à travers le trou de liaison (60), deux côtés opposés du ressort hélicoïdal (22) viennent en butée contre la première face latérale à une extrémité du trou de liaison (60) et une extrémité de l'ensemble de liaison (60) respectivement, et un des deux côtés du ressort hélicoïdal (22) vient en butée à la fois contre la première partie arquée (43) et la seconde partie arquée (53).

6. Disque de frein selon la revendication 1, dans lequel l'ensemble de liaison (20) comporte un élément formant boulon (23) et un élément formant écrou (24), dans lequel l'élément formant boulon (23) et l'élément formant écrou (24) sont disposés à travers le premier mécanisme d'assemblage (41) et le second mécanisme d'assemblage (51) et vissés solidement l'un à l'autre, l'élément d'espacement (25) est disposé autour de l'élément formant boulon (23) et de l'élément formant écrou (24) et situé sur la première face latérale (11), et le ressort hélicoïdal (22) vient en butée entre l'élément d'espacement (25) et la première face latérale (11).

7. Disque de frein selon la revendication 1, dans lequel l'élément de liaison (20) comporte en outre une partie d'identification (70) et une partie de fixation (21), la partie de fixation (21) est disposée à travers le ressort hélicoïdal (22), le premier mécanisme d'assemblage (41) et le second mécanisme d'assemblage (51), et la partie d'identification (70) est assemblée solidement sur la partie de fixation (21) et située sur la seconde face latérale (12).

8. Disque de frein selon la revendication 6, dans lequel l'élément formant écrou (24) comporte une partie de butée (241), une partie de corps (242) et une partie entourée (243), la partie de corps (242) est disposée à travers les premier et second mécanismes d'assemblage (41, 51), la partie de corps (242) est sensiblement en prise ajustée avec les premier et second mécanismes d'assemblage (41, 51), la partie de butée (241) vient en butée contre la seconde face latérale (12), et le ressort hélicoïdal (22) et l'élément d'espacement (25) sont disposés autour de la partie entourée (243) et pris en sandwich de manière limitée entre l'élément formant boulon (23) et la première face latérale (11).

9. Disque de frein selon la revendication 1, dans lequel lorsque la paroi circonférentielle (252) vient en butée contre la première face latérale (11), la spire supérieure du ressort à enroulement conique (22) n'entre pas en contact avec la première face latérale (11).
